# EUROPEAN PATENT SPECIFICATION

(11) **EP 1 998 409 B1**
(45) Date of publication and mention of the grant of the patent: **07.08.2013**
(21) Application number: 07785294.5
(22) Date of filing: 09.08.2007
(51) Int. Cl.: A47J 27/21, A47J 37/12, H01R 13/453

(54) **Electrical connector and an electrical water heater comprising such connector**
Elektrischer Verbinder und elektrischer Wasserhitzer mit solchem Verbinder
Connecteur électrique et bouilloire électrique avec tel connecteur

(30) Priority: 16.05.2007 CN 200710106245
(43) Date of publication of application: 03.12.2008
(73) Proprietor: Ningbo Goodfriends Electric Appliance Co., Ltd, Yuyao Ningbo Zhejiang 315408 (CN)
(72) Inventor: ZHU, Jizhong, Zhejiang 315408 (CN)
(74) Representative: Gervasi, Gemma
(86) International application number: PCT/CN2007/002387
(87) International publication number: WO 2008/086674

(56) References cited:
- WO-A1-2006/065058
- CN-Y- 2 472 616
- CN-Y- 2 571 301
- FR-A1- 2 795 857
- GB-A- 435 330
- GB-A- 1 240 922
- GB-A- 2 174 293
- GB-A- 2 272 805
- GB-A- 2 318 926
- US-A- 5 997 319
- US-A1- 2002 189 463
- US-B1- 7 002 108

## Description

### Field of the invention

This invention relates to a socket connector for a wireless electrical water heater, for example an electrical kettle, and an electrical water heater with said connector.

### Description of the Related Art

Usually, an assembled controller/connector for a wireless electrical water heater has a base or bottom which is connected with an electrical source, the heater is supplied with power by sitting on the base.

There are two main designs for such device:
One design provides a base connected to an electrical source, a housing upward extended is formed on the base, there are three contacts comprised of flat spring in the housing, there are also three slots for receiving end prongs which extend from a thermal controller and are parallel installed on the rear of the heater, on front of the housing. The slots are closed from outside by a movable cover. When the plug is plugged in, said cover is removed, and said cover will keep closed when the plug is removed, to reach an electrical isolation from the outside. An advantage of this structure is to provide a simple means for safety electrical isolation, however, said cover could be removed easily. So the contact, which is powered, will be exposed to the outside and cause electric shock. Therefore, it also needs additional mean of electrical isolation. Some technical developments was based on this design, a second electrical connection set on the base portion on which contacts having a movable upper portion set, the contacts are non-electrified while the heater is removed, the electrical connection can be achieved as the heater sitting in the base, so as to contact with the free portion firstly, then to push them keep moving until contacting with the electrified contact. This improvement is useful for solving the excessive electric are on a contact end of the connector, but it only increases the distance of electrical connection, so from the point of preventing misoperation of users, an effect of such increased distance can be negligible.

Another design provides a socket connector inside of a power base for a wireless electrical water heater, comprising a housing defining a plurality of single-continued slots in the upper area and a plurality of contacts set under the slots, wherein a plug connector can be inserted through the slots. A disadvantage of this design is that the slots are connected as a socket hole due to the slots run-through, and the slots above a live wire and a neutral wire are manufactured in a small size in order-to restrict the possibility of entering socket holes. In addition, it does not have a device for preventing the insulated cover opened by misoperation; therefore, small size metal things cannot be prevented from an accidental insertion. It is a common phenomenon for electrical water heater that water always drops on a base, and water easily stays above on the socket holes.

It is inevitable for the electrical liquid heater of the prior art to have the problem that the liquid will be splashed onto the base thereof, whatever the manufacturer marks a line "water cannot be immersed in the electrical device" on an obvious positions of the product and the specification. This note is useless for the real operation. When water is splashed onto the base, the electric distance would be reduced if there is no effective mean to prevent the protection cover open. This kind of protection mean becomes a serious hidden risk. Therefore, it is a necessary mean for preventing electric shock to restrict the movement of the protection cover, so that the electrified contacts are disposed in a position whereto the users hardly touch. On the other hand, the restriction function of the protection cover cannot be over-protected, otherwise some normal operations could be affected.

An example of known devices affected by such problems is disclosed in US 2002/0189463, wherein an electric frying pot is described, and in GB 435,330 concerning electric plug in comprises.

### SUMMARY OF THE INVENTION

An object of this invention is to provide a socket connector which can overcome the disadvantages of prior art, and the socket connector not only can achieve to an easy combination and separation of a body and a base of a water heater, but it also can make contacts thereof completely isolated from outer environment but not being coupled by a misoperation when the contacts are coupled to an electrical power but not being coupled to prongs. Therefore, this socket connector is reliable and safety.

Further object of this invention is to provide a water heater which can overcome the disadvantages of art, and the water heater not only can achieve to an easy combination and separation of a body and a base thereof, but it also can make contacts thereof completely isolated from outer environment but not being coupled by a misoperation when the contacts are coupled to an electrical power but not being coupled to prongs.

A socket connector for an electrical water heater according to the present invention, comprises the features disclosed in claim 1.

Said insulated cover has pivots articulated within said housing, and said insulated cover rotates around said pivots

Said insulated cover is provided with a return device pushing said insulated cover back to the initial position.

Said pushing socket hole is U-shape.

A pushing rib formed on the top of said insulated cover is corresponding with said pushing socket hole.

A locating block is formed on said housing, the front end of said insulated cover resting on said locating block.

The socket holes corresponding with the electrified contact are square, the width of the socket holes is 2mm-4mm and the length of the socket holes is 4mm-8mm.

A plurality of partitioning plates are formed on said insulated cover and divide said housing into plurality chambers, said electrified contact respectively located in corresponding chambers.

The bottom of said housing has a cover plate on which a water discharging aperture is formed.

Said electric contact comprises a fixed end and a free end, said free end may contact with said fixed end while a lateral force pushes said free end towards said fixed end.

An exemplary combined plug connector for an electrical water heater comprises a main body, a device of thermal sensitive controlling mounted on said main body and a plurality of prongs locating on the end of said main body, wherein a pushing prong is mounted on the end of said main body, said pushing prong adapted to be inserted into said pushing socket hole of said socket connector, so as to push said insulated cover of said socket connector.

A bottom of said pushing prong forms a slope.

A length of said pushing prong may be longer than a length of said prongs.

A length of said pushing prong may be equal to a length of said prongs.

Said pushing prong is in U-shape.

A through hole may be formed on a base of said U-shaped pushing prong, a connecting chip of earth wire mounted inside of a slot of said U-shaped pushing prong, a contact of said connecting chip of earth wire located into said through hole.

The number of said prongs is two, and said pushing prong disposed between said prongs.

An exemplary connector for an electrical water heater, comprises a socket connector and a combined plug connector, said socket connector comprising a housing and a plurality of contacts mounted within said housing, a plurality of spaced socket holes formed onto said housing, said contacts respectively corresponding with said socket holes, wherein a moveable insulated cover is provided within said housing, said insulated cover may at least enclose the socket holes corresponding with those said contacts which are electrified contact from inside of said housing, so that the electrified contact is isolated from the socket holes, a pushing socket hole is formed onto said housing, said insulated cover can be pushed only by said pushing socket hole from the outside of said housing, so that said insulated cover opens the socket holes corresponding with the electrified contact from inside of said housing, and then the electrified contact can be contacted by the corresponding socket holes from the outside of said housing, said combined plug connector comprising a main body, a device of thermal sensitive controlling mounted on said main body and a plurality of prongs locating on the end of said main body, wherein a pushing prong is mounted on the end of said main body, said said pushing prong adapted to be inserted into said pushing socket hole of said socket connector, so as to push said insulated cover of said socket connector, a pushing prong of said combined plug connector adapted to be inserted into a pushing socket hole of said socket connector , then an insulated cover is pushed away and socket hole corresponding with electrified contacts opened, so that prongs of said combined plug connector contacting with electrified contact of said socket connector through said socket holes.

An electrical water heater, comprises a body and a base, said body forming a heating chamber wherein an immersed electrical heater is disposed, a socket connector coupling to electrical source mounted on said base, a combined plug connector coupling with said electrical heater mounted on said body, said combined plug connector comprises a main body, a device of thermal sensitive controlling mounted on said main body and a plurality of prongs disposed on the end of said main body, wherein a pushing prong is mounted on the end of said main body, said pushing prong adapted to be inserted into said pushing socket hole of said socket connector, so as to push said insulated cover of said socket connector, a pushing prong of said combined plug connector adapted to be inserted into a pushing socket hole of said socket connector , then an insulated cover pushed away and socket hole corresponding with electrified contacts opened, so that prongs of said combined plug connector contact with electrified contact of said socket connector through said socket holes, wherein the socket connector is a connector according to one of claims 1-9.

The socket connector for an electrical water heater according to the present invention has these virtues as following if comparing with the prior art:
1. Due to the insulated cover disposed in the chamber of the housing, the electrified contacts of live wire and neutral wire are isolated from the corresponding socket holes thereof in a condition of out of service, the insulated cover merely can be pushed by the pushing socket hole which is corresponding with the non-electrified contact, but not by the socket holes of the live wire and neutral wire. Therefore, even if an user opens the insulated cover through the pushing socket hole by a misoperation, an electric shock does not occur, so as to dramatically enhance a security of the product.
2. Due to the pushing socket hole is in U-shape, thereby, a general item is hardly inserted into the pushing socket hole for pushing the insulated cover.
3. Due to the partitioning plates and the slope respectively disposed on the housing and the insulated cover, the liquid flowing into the socket holes flows out directly without contacting the electrified contacts, so the security of the product is further improved.
4. Due to the electrified contacts are disposed into the chambers consisted of the partitioning plates and the housing.

The examplary combined plug connector for an electrical water heater here described has these virtues as following:
1. the pushing rib is mounted on the top of the combined plug connector according to the present invention, and can be inserted into the pushing socket hole due to the special U-shape thereof, so as to pushing the insulated cover, then to open the socket holes corresponding with the electrified contacts, then the prongs contact to the electrified contacts. The setting of the special pushing rib makes the cooperation between the combined plug connector and the socket connector more convenient and safer.
2. due to the slope of the top of the pushing rib, it is easy for pushing the insulated cover.
3. due to the U-shape structure of the pushing rib, it is better matched with the shape of the pushing socket hole, then insertion of other item into the pushing socket hole and pushing the insulated cover can be prevented.

The exemplary connector for an electrical water heater has a virtue as following;

The pushing socket hole and the pushing rid are respectively mounted on the socket connector and the combined plug connector of the connector of the present invention, and the insulated cover of the connector merely can be pushed by the cooperation of the both of pushing socket hole and rid, so as to open the corresponding socket holes. Therefore, it is reduce the possibility of electric shock by a misoperation.

The electrical water heater according to the present invention has following virtues if comparing with the prior art:
1. due to the electrical water heater equiped with the socket connector and the combined plug connector, hence, it not only increases safety and reliability of the product, but it also efficiently extends the service life of the product.
2. due to he socket connector may be mounted on the base directly without installation of other isolation device, thereby, the structure thereof is simpler, and the assembly thereof is more convenient.

### BRIEF DESCRIPTION OF THE DRAWINGS

Therese and other aspects and advantages of the invention will become apparent and more readily appreciated from the following descriptions taken in conjunction with the drawings in which:
Fig.1 illustrates a schematic view of a socket connector working with an electrical water heater of the present invention, wherein in order to properly illustrate an electrical heater and a combined plug connector, a portion of the outer housing is cut off;
Fig.2 illustrates a stereogram view of the socket connector of the present invention, for the purpose of illustrating interior assemblies, the portion of the outer housing is cut off;
Fig.3 illustrates a stereogram view of the socket connector of the present invention from other direction, for the purpose of illustrating interior assemblies; the portion of the outer housing is cut off;
Fig.4 illustrates an exploded view of the housing of the socket connector and the insulated cover according to the present invention;
Fig.5 illustrates a top view of the socket connector of the present invention, wherein combined plug connector is not inserted into the socket connector;
Fig.6 illustrates a sectional view of the socket connector of the present invention along line B-B in Fig.5, wherein combined plug connector is not inserted into the socket connector;
Fig.7 illustrates a sectional view of the socket connector of the present invention along line A-A in Fig.5, wherein combined plug connector is not inserted into the socket connector;
Fig.8 illustrates a top view of the socket connector of the present invention, wherein combined plug connector is inserted into the socket connector;
Fig.9 illustrates a sectional view of the socket connector of the present invention along line C-C in Fig.8, wherein combined plug connector is inserted into the socket connector;
Fig.10 illustrates a sectional view of the socket connector of the present invention along line D-D in Fig.8, wherein combined plug connector is inserted into the socket connector;
Fig.11A illustrates a sectional view of another embodiment of the coupling manner of a socket connector and a combined plug connector of the present invention;
Fig.11B illustrates a sectional view of the third embodiment of the coupling manner of a socket connector and a combined plug connector of the present invention;
Fig. 11C illustrates a sectional view of the fourth embodiment of the coupling manner of a socket connector and a combined plug connector of the present invention;
Fig.12A illustrates a sectional view of another embodiment of the insulated cover of the present invention in an enclosing status;
Fig.12B illustrates a sectional view of another embodiment of the insulated cover of the present invention in an opening status;
Fig.13A illustrates a sectional view of another embodiment of the electrified contact of the present invention in a enclosing status;
Fig.13B illustrates a sectional view of another embodiment of the electrified contact of the present invention in an opening status;
Fig.14A illustrates a sectional view of another embodiment of the working manner of the pushing prong and the socket connector in an enclosing status;
Fig.14B illustrates a sectional view of another embodiment of the working manner of the pushing prong and the socket connector in an opening status;
Fig.15A illustrates a sectional view of further embodiment of the working manner of the pushing prong and the socket connector in an enclosing status;
Fig.15B illustrates a sectional view of further embodiment of the working manner of the pushing prong and the socket connector in an opening status;
Fig.16A illustrates a sectional view of further embodiment of the working manner of the pushing prong and the socket connector in an enclosing status;
Fig.16B illustrates a sectional view of further embodiment of the working manner of the pushing prong and the socket connector in an opening status.

### DETAILED DESCRIPTION OF EMBODIMENTS OF THE INVENTION

The embodiments described herein with reference to drawings are explanatory, illustrative, and used to generally understand the present invention.

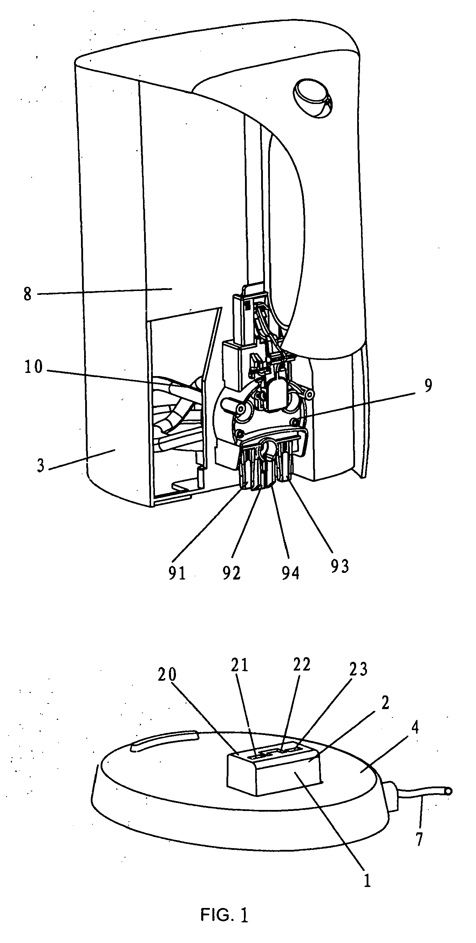

As shown in Fig.1, it provides an embodiment of an electrical water heater according to the present invention. The electrical water heater comprises a body 3 and a base 4, said body 3 forms a heating chamber 8 wherein an immersed electrical heater 10 is disposed. A combined plug connector 9 is mounted on the back of the heating chamber 8, and comprises a main body, a device of thermal sensitive controlling mounted on said main body and a plurality of prongs locating on the end of said main body. As the prior art disclosed, the combined plug connector 9 is coupled to the immersed electrical heater 10 passing through an open disposed a lateral of the heating chamber 8. The end of the main body forms two metal prongs 91, 93 and a pushing prong 92, the pushing prong has a connecting chip of earth wire therein, the immersed electrical heater 10, the prongs 91, 93 and the connecting chip of earth wire of the pushing prong 92 are connected. A socket connector 1 is mounted on the base 4, and a power wire 7 is coupled to the socket connector 1, the power wire 7 is connected to a power when to use the product. Socket holes 21, 23 and a pushing socket hole 22 respectively corresponding with the prongs 91, 93 and pushing prong 92 are formed on the top surface of a housing 2 of the socket connector 1. When the body 3 is sitting on the base 4, the base starts to supply power to the electrical heater 10. As those conventional electrical water heater disclosing the functions, while the water in the heater is heated up to desired temperature (generally up to boiling), the power is automatically cut off, or it provides an overheat protection when the device of automatic switch off broken or there is no water in the heater. The socket connector 1 provides an independent electrical isolation, and directly extends from the base 4; hence an additional structure for electrical isolation is no longer needed. This structure is simple and more convenient in installation. The detailed structures of the combined plug connector 9 and the socket connector 1 of the present invention will be discussed in thereinafter; in order to illustrate mentioned virtues brought from the electrical water heater of the present invention equipped with the combined plug connector 9 and the socket connector 1.

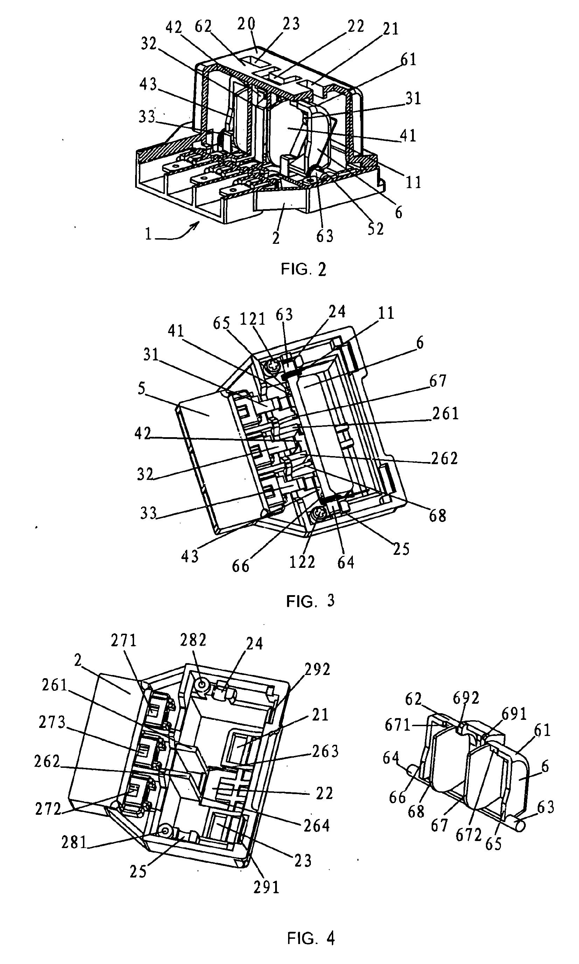

Fig.2, Fig.3 and Fig.4 are respectively stereogram views of the socket connector 1 from different directions and an exploded view of the two assemblies thereof. The socket connector 1 includes a housing 2, an a insulated cover 6, a return device, three contacts 31, 32, 33, a cover plate 5 (as shown in Fig.3) and two bolts 121, 122 for fixing the cover plate. Two socket holes 21, 23 and a pushing socket hole 22 are formed on the housing 2, the two socket holes 21, 23 are spaced a certain distance and respectively can be inserted by the prongs 91, 93 of the combined plug connector 9; the pushing socket hole 22 is corresponding with the pushing prong 92 of the combined plug connector 9. The pushing socket hole 22 is intermediately disposed between the socket holes 21, 22; the pushing prong 92 is intermediately disposed between the prongs 91, 93, and the length thereof is longer than the others (as shown in Fig.1). The insulated cover 6 has two pivots 63, 64 which are mounted in the two slots 24, 25 of the housing 2, and the cover plate 5 is fixed onto the two slots 24, 25 so as to form an aperture for housing the two pivots 63, 64, then the insulated cover 6 is capable of relating with a certain angle. In the embodiment, the return device is a return spring 11 which is mounted on the insulated cover 6 and applies a force to the insulated cover 6, so as to push the insulated cover 6 to engage the housing 2 properly. The insulated cover 6 has four partitioning plates 65, 66, 67, 68 on one side thereof. Said housing 2 is provided with two portioning ribs 261, 262. The portioning plates 65, 66, 67, 68 and the portioning ribs 261, 262 form three chambers 41, 42, 43. The two socket holes 21, 23 and the pushing socket hole 22 of the housing 2 are respectively aligned with the chambers 41, 42, 43 in a vertical direction. The three contacts 31, 32, 33 are fixed on the housing 2 by three lock components 271, 272, 273 of the housing 2, the free ends thereof are mounted into the three chambers 41, 42, 43, on the other hand, the three contacts 31, 32, 33 are respectively aligned with and underneath the two socket holes 21, 23 and a pushing socket hole 22 of the housing 2 in a vertical direction. In the present embodiment, the contacts 31, 33 are electrified, i.e. the contacts of live wire and neutral wire; the contact 32 is non-electrified, i.e. the contact of earth wire. The contacts of live wire and neutral wire are disposed into the chambers on two sides; the contact of earth wire is disposed into the middle chamber. Therefore, when the combined plug connector 9 is inserted into the socket connector 1, the two prongs 91, 93 and the connecting chip of earth wire of the pushing prong 92 of the combined plug connector 9 are respectively corresponding with the three contacts 31, 33, 32. A slope 61, 62 is formed on the top of the insulated cover 6 (as shown in Fig.4), and the slope 61, 62 is disposed underneath the two socket holes 21, 23 of the housing 2, which makes an isolation between the contacts of live wire 31 and neutral wire 33 disposed underneath of the socket holes 21, 23 and the socket hole 21, 23. An angle of the slope 61, 62 is opposite to the opening direction of the insulated cover 6. While an outer component is inserted into the socket hole 21 and socket hole 23, the insulated cover 6 cannot be pushed away, and then the contacts of live wire 31 and of neutral wire 33 are not contactable. In the present embodiment, the pushing socket hole 22 relates to the contact of earth wire, but not the electrified contacts. Whereas the pushing socket hole 22 of the present invention is also set individually, this can be achieved by setting a through hole on the housing 2. However, this structure of the present embodiment is simpler and fully uses the socket hole of the earth wire. A slot is formed on the middle of the top of the insulated cover 6, and two pushing ribs 691, 692 are formed on the two sides of the slot and are respectively aligned to the two sides of the U-shape pushing socket hole in a vertical direction. Therefore, the insulated cover 6 is opened as the two pushing ribs 691, 692 are pressed. As mentioned, the three chambers are partitioned from each other, and there is no electrified contact in the chamber 42, hence, the contacts of live wire and neutral wire are still uncontactable even if the insulated cover 6 is opened through the pushing socket hole 22.

The insulated cover 6 of the present invention is mounted into the housing 2 wherein the contacts 31, 33 and the socket holes 21, 23 are insulated by it, and it is impossible to push the insulated cover 6 through the socket hole 21, 23 from the external of the housing 2. The insulated cover 6 merely can be pushed by the pushing socket hole 22, and the pushing socket hole 22 relates to the non-electrified contact. Hence, the security of the present invention is dramatically enhanced, and the disadvantage of opening by misoperation occurring in the prior art has been overcome.

As shown in Fig. 4, two locating blocks 263, 264 are formed on the housing 2, and the front end of said insulated cover 6 rests on the locating blocks. Such structure positions the insulated cover 6 and stops the rotation of the insulated cover 6 at a certain position.

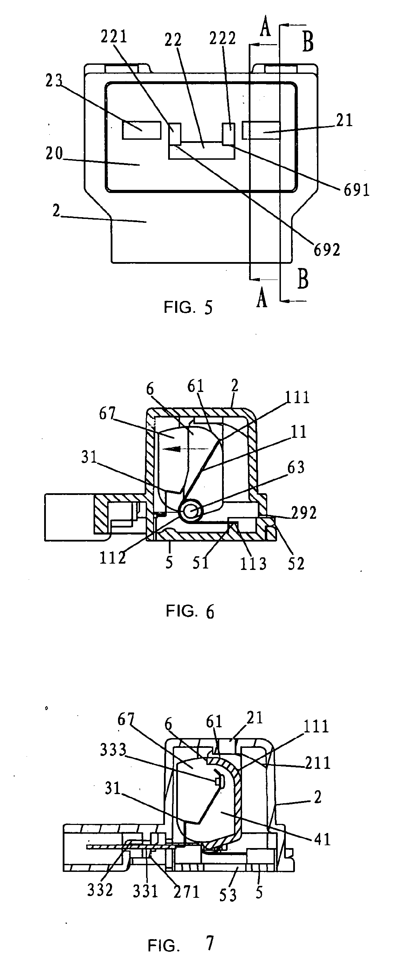

As shown in Fig.5, it illustrates a top view of the socket connector of the present invention, wherein combined plug connector is not inserted into the socket connector. The two socket holes 21, 23 and the pushing socket hole 22 are symmetrically distributed, and three of them are formed along with the vertical direction, wherein the socket holes 21, 23 are corresponding with the electrified contacts 31, 33. These two socket holes 21, 23 are square, the width of the socket holes is 2-4mm, such as 3.5 mm in this embodiment, and the length of the socket holes is 4mm-8mm, such as 5 mm in this embodiment. With such structure, the normal item is hardly inserted into the socket holes so as to increase the safety. The insulated cover 6 is merely pushed by the pushing socket hole 22 from outer of the housing 2, so as to open the socket holes 21, 23. And said insulated cover 6 cannot be opened via the socket holes 21, 23 directly. The pushing socket hole is in U-shape; however, the other socket holes in irregular shape are suitable for the present invention, such as a triangle, a polygon, an oval etc. The purpose of such design is for preventing other items easily being inserted into the pushing socket hole 22. On the other hand, due to the formation of the pushing socket hole is along with the vertical direction, therefore, the pushing socket hole can only be vertically inserted, but not laterally, so as to prevent a lateral insertion of other item by misoperation. The two pushing ribs 691, 692 for pushing the insulated cover 6 are disposed in the pushing socket hole 22 wherein the contact of earth wire is mounted. The other two electrified socket holes 21, 23 are enclosed by the insulated cover 6. Therefore, the insulated cover 6 cannot be pushed, so as to not be opened the electrified socket holes 21, 23, when any item is inserted into the electrified socket holes 21, 23.

As shown in Fig.6, a sectional view of the status wherein combined plug connector is not inserted into the socket connector (B-B line in Fig.5). Wherein the rotation central rings 112 of the return spring 11 are mounted on the pivots 63 of the insulated cover 6, the free end thereof 111 is pressed on the slope 61 of the insulated cover 6, another end thereof 113 is pressed on the rib 51. therefore, the return spring 11 is slightly compressed, so as to make the insulated cover 6 produce a force with the direction illustrated by the arrow of the Fig. then the insulated cover 6 is engaged with the housing 2. By the Fig.6, one end of the cover plate 5 is locked into the lock aperture 292 of the housing by the lock block 52 disposed on the back end (the position of the lock aperture 292 is illustrated in Fig. 4). Another end of the cover plate is fixed on the housing 2 by two bolts 121, 122. This structure ensures that the insulated cover 6 can be returned back to the position to maintain engagement between said insulated cover 6 and the housing 2.

As shown in Fig.7, it illustrates another sectional view of a status wherein the combined plug connector is not inserted into the socket connector (A-A line in Fig.5), the fixed end 331 of the contact 31 is fixed to the housing 2 through the lock components 271 of the housing 2. The lock point 332 locks the lock component 271 of the housing 2 to make is unrelasable. The free end 333 of the contact 31 is disposed inside of the chamber 41. The slope 61 forms a smooth transitional surface in which one side thereof higher than other side thereof i.e. the top of the slope 61 extends over the closest side of the socket hole 21, i.e. the top of the slope 61 extends over the width of the socket hole 21. Hence, an electrified item inserted into the socket hole 21 cannot open the insulated cover 6, so as not to contact to the contact 31. Furthermore, the liquid dropped from the socket hole 21 flows along the slope 61, and then flows out from the water discharging aperture 53 formed on the cover plate 5, so that the liquid is not contacted to the contact 31. In addition, a water guide rib 211 is disposed in the housing 2, so that the water dropped from the socket hole 21 flows to another side wherein no contact is disposed. Another contact 33, slope 62 and the socket hole 23 have same configuration.

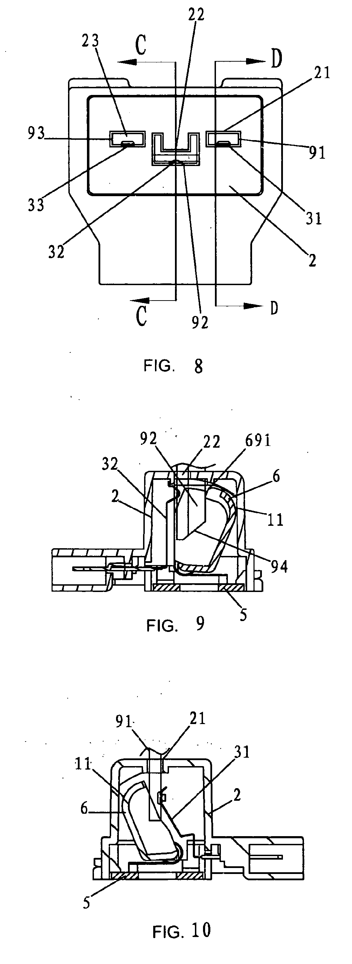

As shown in Fig.8, it illustrates a top view of a status wherein the combined plug connector is inserted into the socket connector, the cross section of the prong 91, 93 of the combined plug connector matches the shapes of the socket hole 21, 23; the pushing prong 92 and the pushing socket hole 22 are shape matched. As shown in Fig.1, the pushing prong is in a U-shape structure and is made of insulating material; moreover, the pushing prong 92 and the end of the main body are in a perpendicular relationship. A connecting chip of earth wire is mounted inside of a slot of the U-shaped pushing prong. A through hole is formed in the slot, the contact of earth wire and the connecting chip of earth wire are contacted by the through hole while the pushing prong 93 is inserted into the pushing socket hole 22. Furthermore, the prongs 91, 93 are square, so as to match the squared socket holes 21, 23 (as shown in Fig. 8). In the status shown in the Fig.8, the insulated cover 6 (not shown in this Fig) has been opened, the contacts 31, 32, 33 disposed into the chambers 41, 42, 43 are exposed, so as to respectively contact to the corresponding prongs 91, 92 and the connecting clip of earth wire disposed in the pushing prong 92, therefore, an electrical connection is formed.

As shown in Fig.9, it illustrates a sectional view of a status wherein the combined plug connector is inserted into the socket connector (C-C line in Fig.8), the pushing prong 92 is inserted into the pushing socket hole 22 along vertical direction. A slope 94 is formed on the top of the pushing prong 92. During the process of insertion, the slope 94 firstly contacts to the pushing rib 691 of the insulated cover 6. As the continued insertion of the pushing prong 92, a lateral pushing force produced by the slope 94 opens the insulated cover 6, so that the connecting clip of earth wire and the contact 32 are contacted. The pushing ribs 691, 692 for pushing the insulated cover 6 are disposed higher than the two side slope 61, 62 referring to Fig. 4. Moreover, as shown in Fig.1, the end surface of the intermediate pushing prong 92 is higher than the end surfaces of other two prongs 91, 93. This structure ensures that the insulated cover 6 has been opened before the two prongs 91, 93 completely inserted, thereby, a coupling interference never occurs. As the insulated cover 6 has been opened, the return spring 11 is compressed and stores a certain energy which produces a reaction force to push the pushing prong 92 toward the contact 32, so as to ensure the reliability of the contacting.

As shown in Fig.10, it illustrates another sectional view of a status wherein the combined plug connector is inserted into the socket connector (D-D line in Fig.8), the prong 91 and the contact 31 have been contacted. The insulated cover 6 has been opened; the return spring 11 has been compressed so as to store certain energy. On the other hand, the prong 93 and the contact 33 have been contacted as well. The engagement of the combined plug connector and the socket connector is completed.

According to above-mentioned figures, the prongs 91, 93 separate with the contact 31, 33 firstly during the combined plug connector 9 is being removed from the base 4. When the pushing prong 92 is to be about to separate with the pushing ribs 691, 692, the insulated cover 6 engages with the housing 2 due to the return force produced by the compressed return spring 11. Therefore, the contacts 31, 32, 33 are still isolated in the chambers 41, 42, 43. After that, the whole circle of coupling of the socket connector and the combined plug connector of the present invention is finished.

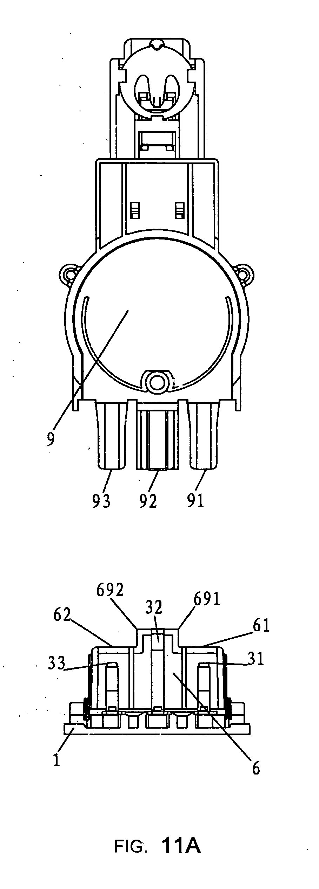

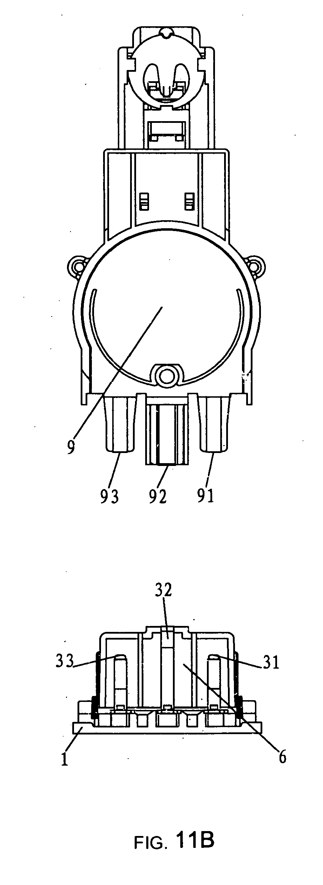

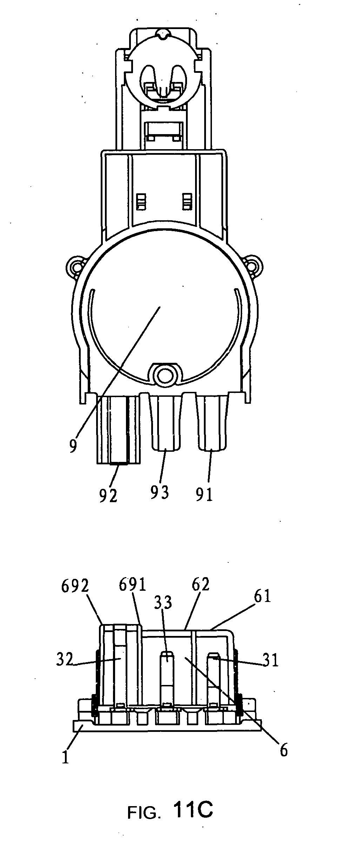

Refer to Fig. 11A, 11 B, 11C; it illustrates other three coupling manners of the socket connector of the present invention and the combined plug connector. As shown in Fig. 11A, the two prongs 91, 93 and the pushing prong 92 are mounted on the combined plug connector 9, and three of them are disposed on a same level. The height of the contacts 31, 32, 33 disposed in the socket connector 1 has been adjusted. The top sides of the slopes 61, 62 are lower than the two pushing ribs 691, 692 for pushing the insulated cover 6. This structure also ensures the pushing prong 22 to push away the insulated cover 6, before the prongs 91, 93 and the contacts are contacted.

As shown in Fig. 11B, the two prongs 91, 93 and the pushing prong 92 are mounted on the combined plug connector 9 wherein the length of the pushing prong 92 is longer than the length of the prongs 91, 93. The top ends of the contacts 31, 33 are in horizontal direction, and the contact planes are on the top of the prongs 91, 93.

As shown in Fig. 11C, the two prongs 91, 93 and the pushing prong 92 are mounted on the combined plug connector 9 wherein the pushing prong 92 is disposed on lateral side. The positions of the corresponding components, such as the contact of earth wire 32 of the socket connector 1, the slope 62 and the two pushing ribs 691, 692 of the insulated cover 6, are adjusted according to the change of the position of the pushing prong 92.

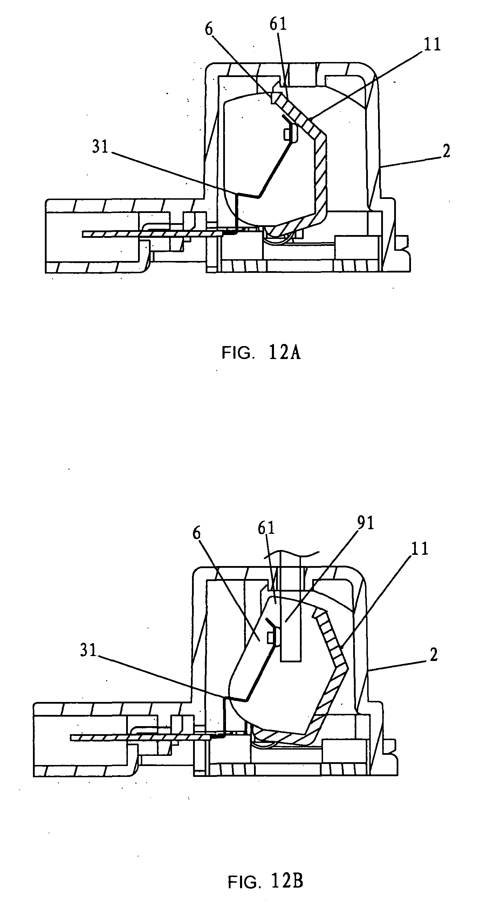

As shown in Fig.12A and 12B, it illustrates another embodiment of the insulated cover of the present invention; the slope 61 of the insulated cover 6 is an inclined line type slope instead of the arc slope in previous embodiment.

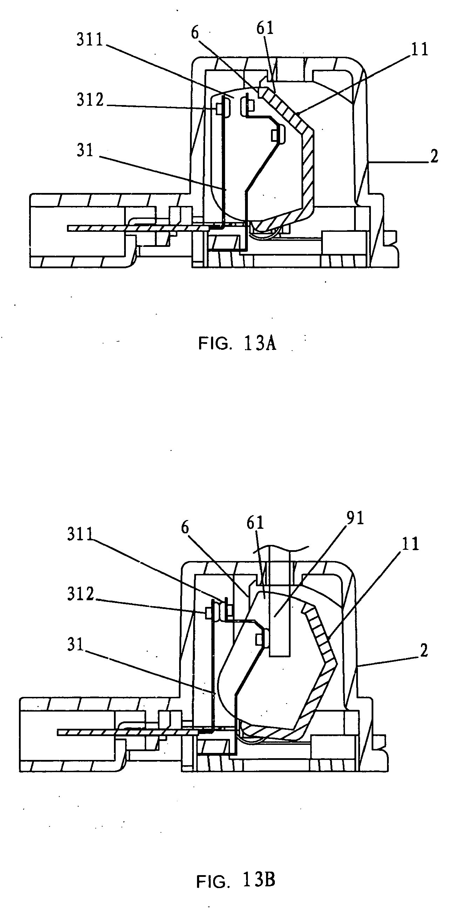

As shown in Fig.13A and 13B, it illustrates another embodiment of the electrified contact of the present invention; the contact 31 includes additional fixed contact 312 and a movable contact 311. When the combined plug connector and the socket connector are not coupled yet, the two contacts 312,311 do not contact each other; but when the two connectors are coupled, the movable contact 311 is driven toward the fixed contact under a lateral force of the prong 91, so as to contact with the fixed contact 312. This structure can efficiently eliminate an effect of electric arc and extend the service life.

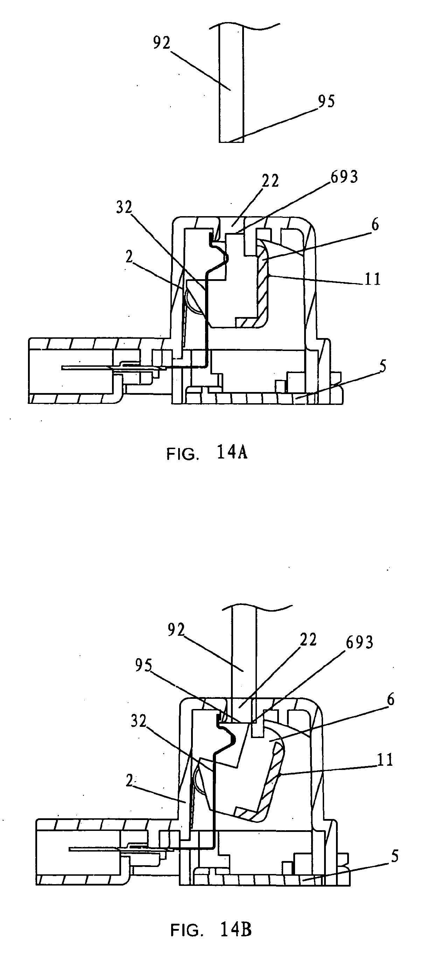

As shown in Fig.14A and Fig.14B, it illustrates a another embodiment of the working manner of the pushing prong and the socket connector of the present invention, the end surface 95 of the pushing prong 92 of the combined plug connector is a plane. The rotation centre of the insulated cover 6 is disposed underneath but not vertically aligned with the pushing socket hole 22. A pushing wall 693 with a plane is formed on the insulated cover 6. When the pushing prong 92 is inserted into the pushing socket hole 22, the insulated cover 6 is rotated by a tangential component force.

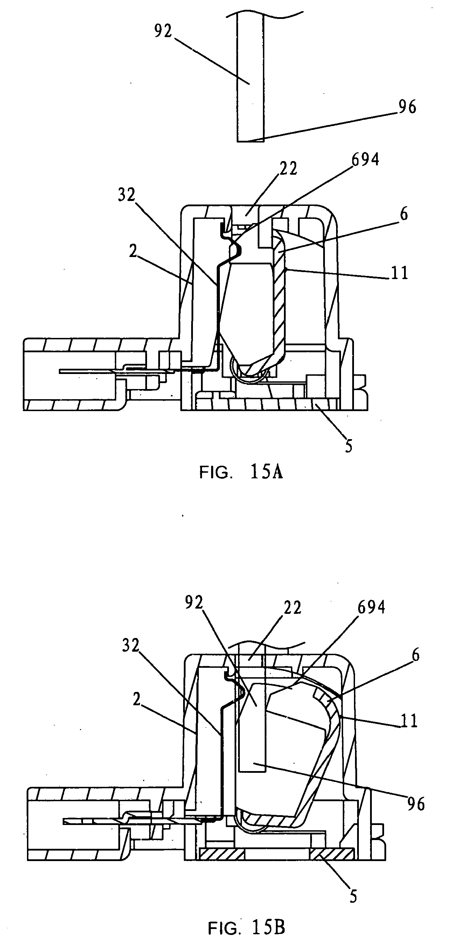

As shown in Fig.15A and Fig.15B, it illustrates a further embodiment of the working manner of the pushing prong and the socket connector of the present invention, the end surface 96 of the pushing prong 92 of the combined plug connector is a plane. The rotation centre of the insulated cover 6 is disposed underneath and vertically aligned with the pushing socket hole 22. A triggering wall 694 with a lateral-inclined surface is formed on the insulated cover 6. When the pushing prong 92 is inserted into the pushing socket hole 22, the insulated cover 6 is rotated by a lateral component force.

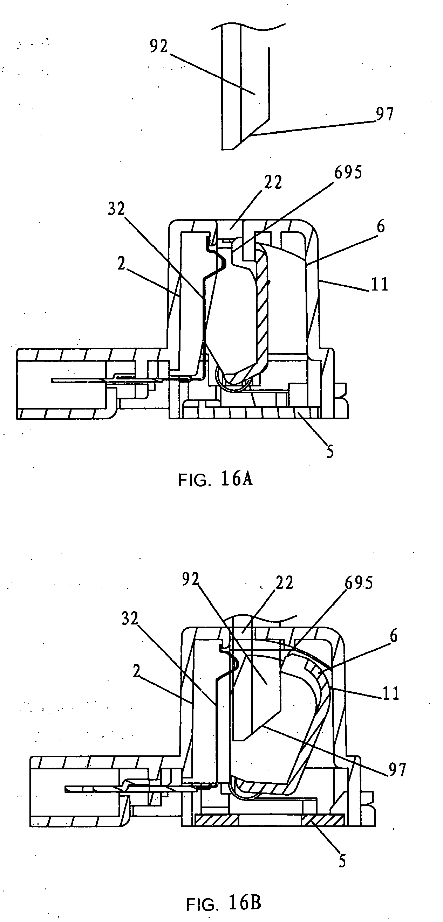

As shown in Fig.16A and Fig.16B, it illustrates one more embodiment of the working manner of the pushing prong and the socket connector of the present invention, the end surface 97 of the pushing prong 92 of the combined plug connector is a lateral-inclined surface. The rotation centre of the insulated cover 6 is disposed underneath and vertically aligned with the pushing socket hole 22. A triggering wall 695 with a vertical surface is formed on the insulated cover 6. When the pushing prong 92 is inserted into the pushing socket hole 22, the insulated cover 6 is rotated by a lateral component force.

The above-mentioned socket connector and combined plug connect are combined as a connector of an electrical water heater.

Although explanatory embodiments have been shown and described, it would be appreciated by those skilled in the art that changes and modifications can be made in the embodiments without departing from principles of the invention. Such changes and modifications all fall into the scope of the claims.

## Claims

1. A socket connector (1) for an electrical water heater (10), comprising: a housing (2) and a plurality of contacts (31, 32, 33) mounted within said housing, a plurality of spaced socket holes (21, 23) formed onto said housing, said contacts respectively corresponding with said socket holes, wherein a moveable insulated cover (6) is provided within said housing (2), said insulated cover (6) at least encloses the socket holes (21, 23) corresponding with those said contacts which are electrified contacts from inside of said housing, so that the electrified contact is isolated from the socket holes (21, 23), a pushing socket hole (22) formed onto said housing (2), said insulated cover (6) can be pushed only by said pushing socket hole (22) from the outside of said housing (2), so that said insulated cover (6) opens the socket holes (21, 23) corresponding with the electrified contact from inside of said housing (2), and then the electrified contact can be contacted by the corresponding socket holes (21, 23) from the outside of said housing, said insulated cover (6) having pivots (63, 64) articulated within said housing (2), and said insulated cover (6) rotating around said pivots (63, 64), **characterized in that** the top of said insulated cover (6) is a slope (61) which is disposed underneath said socket holes (21, 23), said slope (61) forming a smooth transitional surface in which one side thereof is higher than other side thereof, a top of said slope (61) extending over widths of said socket holes (21, 23).

2. The socket connector (1) for an electrical water heater (10) of claim 1, wherein said insulated cover (6) is provided with a return device pushing said insulated cover (6) back to the initial position.

3. The socket connector (1) for an electrical water heater (10) of claim 1, **characterized in that** said pushing socket hole (22) is U-shape.

4. The socket connector (1) for an electrical water heater (10) of claim 1, **characterized in that** a pushing rib (691) formed on the top of said insulated cover (6) is corresponding with said pushing socket hole (22).

5. The socket connector (1) for an electrical water heater (10) of claim 1, **characterized in that** a locating block (263, 264) is formed on said housing (2), and the front end of said insulated cover (6) rests on said locating block (263).

6. The socket connector (1) for an electrical water heater (10) of claim 1, **characterized in that** the socket holes (21, 23) corresponding with the electrified contact (31, 33) are square, the width thereof is 2mm-4mm and the length thereof is 4mm-8mm.

7. The socket connector (1) for an electrical water (10) heater of claim 1, **characterized in that** a plurality of partitioning plates are formed on said insulated cover (6), said electrified contact (31, 33) respectively disposed in corresponding chambers (41, 42, 43) of said housing (2) divided by said partitioning plates.

8. The socket connector (1) for an electrical water heater (10) of claim 1, **characterized in that** the bottom of said housing (2) has cover plate (5) on which a water discharging aperture (53) is formed.

9. The socket connector (1) for an electrical water heater (10) of claim 1, **characterized in that** said electrified contact (31) comprises a fixed end (33) and a free end (333), said free end (333) contacting with said fixed end (331) while a lateral force pushes said free end (333) toward said fixed end (331).

10. An electrical water heater (10), comprising a body (3) and a base (4), said body (3) forming a heating chamber (8) wherein an immersed electrical heater (10) is disposed, a socket connector (1) coupling to electrical source mounted on said base (4), a combined plug connector (9) coupling with said electrical heater (10) mounted on said body (3), said combined plug connector (9) comprising a main body (3), a device of thermal sensitive controlling mounted on said main body (3) and a plurality of prongs (91-93) disposed on the end of said main body (3), a pushing prong (92) mounted on the end of said main body (3), said pushing prong (92) being adapted to be inserted into said pushing socket hole (22) of said socket connector (1), so as to push said insulated cover (6) of said socket connector (1), then an insulated cover is pushed away and socket hole corresponding with electrified contacts opened, so that prongs (91-93) of said combined plug connector (9) contact with electrified contact of said socket connector (1) through said socket holes (21,23), **characterized in that** said socket connector (1) is a connector according to one of claims to 9.

## Patentansprüche

1. Steckverbinder (1) für einen elektrischen Wassererhitzer (10) aufweisend ein Gehäuse (2), eine Vielzahl von Kontakten (31, 32, 33), die im Gehäuse angeordnet sind, eine Vielzahl von beabstandeten Sockelöffnungen (21, 23), die auf dem Gehäuse ausgebildet sind, wobei die Kontakte mit den entsprechenden Sockelöffnungen übereinstimmen, und wobei eine bewegliche isolierte Abdeckung (6) innerhalb des Gehäuses (2) vorgesehen ist, welche isolierte Abdeckung (6) zumindest die Sockelöffnungen (21, 23) umgibt, die den Kontakten entsprechen, die von einem Inneren des Gehäuses elektrifiziert werden, sodass der elektrifizierte Kontakt von den Sockelöffnungen (21, 23) isoliert ist, wobei eine aufdrückbare Sockelöffnung (22) auf dem Gehäuse 2 ausgebildet ist, sodass die isolierende Abdeckung (6) nur durch die aufdrückbare Sockelöffnung (22) von der Außenseite des Gehäuses (2) aufgedrückt werden kann, derart dass die isolierende Abdeckung die Sockelöffnungen (21, 23) öffnet, die mit dem elektrifizierten Kontakt im Inneren des Gehäuses (2) übereinstimmt, sodass der elektrifizierte Kontakt mit den entsprechenden Sockelöffnungen (21, 23) von außerhalb des Gehäuses kontaktiert werden kann, wobei die isolierte Abdeckung (6) Zapfen (63, 64) aufweist, die innerhalb des Gehäuses (2) angelenkt sind wobei die isolierte Abdeckung (6) um die Zapfen (63, 64) schwenkt, **dadurch gekennzeichnet, dass** auf der Oberseite der isolierten Abdeckung (6) eine Neigung (61) ist, die unterhalb der Sockelöffnungen (21, 23) angeordnet ist und wobei die Schräge (61) eine gleichmäßige Übergangsoberfläche bildet, deren eine Seite höher ist als die andere Seite, und sich eine Oberseite der Schräge (61) über die Breite der Sockelöffnungen (21, 23) erstreckt.

2. Steckverbinder (1) für einen elektrischen Wassererhitzer (10) nach Anspruch 1, bei dem die isolierte Abdeckung (6) mit einer Rückführvorrichtung versehen ist, welche die isolierte Abdeckung (6) in ihre Ausgangsposition zurückschiebt.

3. Steckverbinder (1) für einen elektrischen Wassererhitzer (10) nach Anspruch 1, **dadurch gekennzeichnet, dass** die schiebende Sockelöffnung (22) U-förmig ist.

4. Steckverbinder (1) für einen elektrischen Wassererhitzer (10) nach Anspruch 1, **dadurch gekennzeichnet, dass** eine Schieberippe (691) auf der Oberseite der isolierten Abdeckung (6) in Übereinstimmung mit der aufdrückbaren Sockelöffnung (22) ausgebildet ist.

5. Steckverbinder (1) für einen elektrischen Wassererhitzer (10) nach Anspruch 1, **dadurch gekennzeichnet, dass** ein Zentrierblock (263, 264) an dem Gehäuse (2) ausgebildet ist und das sich das vordere Ende der isolierten Abdeckung auf dem Führungsblock (263) abstützt.

6. Steckverbinder (1) für einen elektrischen Wassererhitzer (10) nach Anspruch 1, **dadurch gekennzeichnet, dass** die Sockelöffnungen (21, 23), die dem elektrifizierten Kontakt (31, 33) entsprechen, quadratisch sind, wobei die Breite davon 2 bis 4 mm und die Länge 4 bis 8 mm beträgt.

7. Steckverbinder (1) für einen elektrischen Wassererhitzer nach Anspruch 1, **dadurch gekennzeichnet, dass** eine Vielzahl von Aufteilungsplatten auf der isolierten Abdeckung (6) ausgebildet sind, wobei die elektrifizierten Kontakte (31, 23) in entsprechenden Kammern (41, 42, 43) des Gehäuses (2) angeordnet sind, welches durch die Aufteilungsplatten geteilt wird.

8. Steckverbinder (1) für einen elektrischen Wassererhitzer (10) nach Anspruch 1, **dadurch gekennzeichnet, dass** der Boden des Gehäuses (2) eine Abdeckplatte (5) aufweist, in welcher eine Wasserauslassöffnung (53) ausgebildet ist.

9. Steckverbinder (1) für einen elektrischen Wassererhitzer (10) nach Anspruch 1, **dadurch gekennzeichnet, dass** der elektrifizierte Kontakt (31) ein befestigtes Ende (33) und ein freies Ende (333) aufweist, wobei das freie Ende (333) mit dem befestigten Ende (331) verbunden ist, während eine seitliche Kraft das freie Ende (333) in Richtung des festen Endes (331) drückt.

10. Elektrischer Wassererhitzer (10) aufweisend einen Körper (3), eine Basis (4), wobei der Körper (3) eine Heizkammer (8) bildet, in welcher ein eingetauchtes elektrisches Heizelement (10), einen Steckverbinder (1), der mit einer Stromquelle verbindet, die auf der Basis (4) angeordnet ist, einen kombinierten Steckverbinder (9), der mit dem elektrischen Heizelement verbindet, der auf dem Körper (3) befestigt ist, wobei der kombinierte Steckverbinder (9) einen Hauptkörper (3) aufweist, eine Vorrichtung zum thermosensitiven Steuern auf dem Hauptkörper (3) montiert ist, wobei eine Vielzahl von Zacken (91 bis 93) am Ende des Hauptkörpers (3) angeordnet sind, und wobei ein Verschiebezacken (92), der am Ende des Hauptkörpers (3) befestigt ist, so ausgeführt ist, dass der Verschiebezacken (92) in die aufdrückbare Sockelöffnung (22) des Steckverbinders (1) eingesetzt wird, so dass er die isolierte Abdeckung (6) des Steckverbinder (1) aufdrückt, sodass eine isolierte Abdeckung weggedrückt und die Sockelöffnung, die den elektrifizierten Kontakten entspricht, geöffnet wird, sodass die Zacken (91 bis 93) des kombinierten Steckverbinders (9) den elektrifizierten Kontakt des Steckverbinders (1) durch die Sockelöffnungen (21, 23) kontaktiert werden, **dadurch gekennzeichnet, dass** der Steckverbinders (1) ein Verbinder nach einem der Ansprüche 1 bis 9 ist.

## Revendications

1. Embase de connecteur (1) pour une bouilloire électrique (10), comprenant : un logement (2) et une pluralité de contacts (31, 32, 33) montés dans ledit logement, une pluralité de trous d'embase (21, 23) espacés formés sur ledit logement, lesdits contacts correspondant respectivement aux dits trous d'embase, dans laquelle un élément de recouvrement isolé (6) mobile est prévu dans ledit logement (2), ledit élément de recouvrement isolé (6) entoure au moins les trous d'embase (21, 23) correspondant à ces dits contacts qui sont des contacts électrifiés à partir de l'intérieur dudit logement, de sorte que le contact électrifié est isolé des trous d'embase (21, 23), un trou d'embase de poussée (22) formé sur ledit logement (2), ledit élément de recouvrement isolé (6) ne peut être poussé que par ledit trou d'embase de poussée (22) à partir de l'extérieur dudit logement (2), de sorte que ledit élément de recouvrement isolé (6) ouvre les trous d'embase (21, 23) correspondant au contact électrifié à partir de l'intérieur dudit logement (2), et ensuite le contact électrifié peut être mis en contact avec les trous d'embase (21, 23) correspondants à partir de l'extérieur dudit logement, ledit élément de recouvrement isolé (6) comportant des pivots (63, 64) articulés dans ledit logement (2), et ledit élément de recouvrement isolé (6) pouvant tourner autour desdits pivots (63, 64), **caractérisée en ce que** la partie supérieure dudit élément de recouvrement isolé (6) est une pente (61) qui est disposée sous lesdits trous d'embase (21, 23), ladite pente (61) formant une surface de transition régulière dans laquelle un côté de celle-ci est plus haut qu'un autre côté de celle-ci, une partie supérieure de ladite pente (61) s'étendant sur les largeurs desdits trous d'embase (21, 23).

2. Embase de connecteur (1) pour une bouilloire électrique (10) selon la revendication 1, dans laquelle ledit élément de recouvrement isolé (6) est pourvu d'un dispositif de rappel poussant ledit élément de recouvrement isolé (6) de retour vers la position initiale.

3. Embase de connecteur (1) pour une bouilloire électrique (10) selon la revendication 1, **caractérisée en ce que** ledit trou d'embase de poussée (22) a une forme en U.

4. Embase de connecteur (1) pour une bouilloire électrique (10) selon la revendication 1, **caractérisée en ce qu'**une nervure de poussée (691) formée sur la partie supérieure dudit élément de recouvrement isolé (6) correspond au dit trou d'embase de poussée (22).

5. Embase de connecteur (1) pour une bouilloire électrique (10) selon la revendication 1, **caractérisée en ce qu'**un bloc de positionnement (263, 264) est formé sur ledit logement (2), et l'extrémité avant dudit élément de recouvrement isolé (6) repose sur ledit bloc de positionnement (263).

6. Embase de connecteur (1) pour une bouilloire électrique (10) selon la revendication 1, **caractérisée en ce que** les trous d'embase (21, 23) correspondant au contact électrifié (31, 33) sont carrés, la largeur de ceux-ci est de 2 mm à 4 mm et la longueur de ceux-ci est de 4 mm à 8 mm.

7. Embase de connecteur (1) pour une bouilloire électrique (10) selon la revendication 1, **caractérisée en ce qu'**une pluralité de plaques de séparation sont formées sur ledit élément de recouvrement isolé (6), ledit contact électrifié (31, 33) étant disposé respectivement dans les chambres (41, 42, 43) correspondantes dudit logement (2) séparées par lesdites plaques de séparation.

8. Embase de connecteur (1) pour une bouilloire électrique (10) selon la revendication 1, **caractérisée en ce que** la partie inférieure dudit logement (2) comporte une plaque de recouvrement (5) sur laquelle une ouverture de déchargement d'eau (53) est formée.

9. Embase de connecteur (1) pour une bouilloire électrique (10) selon la revendication 1, **caractérisée en ce que** ledit contact électrifié (31) comprend une extrémité fixe (33) et une extrémité libre (333), ladite extrémité libre (333) étant en contact avec ladite extrémité fixe (331) alors qu'une force latérale pousse ladite extrémité libre (333) vers ladite extrémité fixe (331).

10. Bouilloire électrique (10), comprenant un corps (3) et une base (4), ledit corps (3) formant une chambre de chauffage (8) dans laquelle un dispositif de chauffage électrique (10) immergé est disposé, une embase de connecteur (1) couplant à une source électrique montée sur ladite base (4), un connecteur enfichable combiné (9) couplant au dit dispositif de chauffage électrique (10) monté sur ledit corps (3), ledit connecteur enfichable combiné (9) comprenant un corps principal (3), un dispositif de commande thermosensible monté sur ledit corps principal (3) et une pluralité de griffes (91 à 93) disposées sur l'extrémité dudit corps principal (3), une griffe de poussée (92) montée sur l'extrémité dudit corps principal (3), ladite griffe de poussée (92) étant conçue pour être insérée dans ledit trou d'embase de poussée (22) de ladite embase de connecteur (1), de manière à pousser ledit élément de recouvrement isolé (6) de ladite embase de connecteur (1), ensuite un élément de recouvrement isolé est éloigné et un trou d'embase correspondant aux contacts électrifiés est ouvert, de sorte que les griffes (91 à 93) dudit connecteur enfichable combiné (9) viennent en contact avec un contact électrifié de ladite embase de connecteur (1) à travers lesdits trous d'embase (21, 23), **caractérisée en ce que** ladite embase de connecteur (1) est un connecteur selon l'une des revendications 1 à 9.
